# EUROPEAN PATENT APPLICATION

(11) **EP 1 016 442 A2**
(43) Date of publication of application: **05.07.2000**
(21) Application number: 99126113.2
(22) Date of filing: 29.12.1999
(51) Int. Cl.: B01D 19/04, C11D 3/00

(54) **Antifoam compositions containing ultra high molecular weight resins**

(30) Priority: 31.12.1998 US 224398
(71) Applicant: DOW CORNING CORPORATION, Midland Michigan 48686-0994 (US)
(72) Inventor: Juen, Donnie Ray, Sanford, Michigan 48657 (US); Zhong, Bianxiao, Midland, Michigan 48640 (US)
(74) Representative: Sternagel, Fleischer, Godemeyer & Partner Patentanwälte

(57) **Abstract**

A foam control composition is disclosed comprising (I) a liquid siloxane component and (II) a finely divided filler having its surface rendered hydrophobic, characterized in that the liquid siloxane component (I) has a viscosity at 25°C. of at least 5,000 mPa·s and is obtained by mixing (1) 100 parts by weight of a polydiorganosiloxane having at least one terminal silanol group and at least 40 Si atoms, (2) 0 - 100 parts by weight of a polydiorganosiloxane having triorganosiloxy end groups and (3) from 0.5 to 10 parts by weight of an ultra high molecular weight organopolysiloxane resin comprising the copolymerized reaction product of
(A) a solid MQ resin with Mw less than 100,000 and
(B) a substantially linear polydiorganosiloxane linker having hydrolyzable groups bonded to silicon atoms or silicon bonded hydrogen atoms, wherein components (A) and (B), are copolymerized in a weight ratio of (A):(B) typically ranging from 5.6:1 to 44.5:1.

## Description

Our invention provides silicone foam control compositions and a method of making said foam control compositions.

In many aqueous systems, e.g., in food processes, textile drying, paper production, sewage treatment and cleaning applications, surface active agents are present either as an unwanted ingredient or as a deliberately introduced material to achieve a certain function. Due to the presence of these surface active agents, foam is often generated. In certain applications, such as in dishwashing by hand, this is a welcome effect but in other applications foam generation can lead to unsatisfactory results. This is, for example, the case in the dyeing of textiles or in the manufacture of paper. In other applications, for example, the use of detergent compositions for domestic laundering, the production of foam needs to be controlled rather than avoided. It is important to keep the foam formation to an acceptable level, especially when laundering is performed in automatic front loading washing machines. Excessive foam would cause overflow of the washing liquor onto the floor as well as reduction in the efficiency of the laundering operation itself.

Foam control compositions are known in such industries and have been incorporated into, for example, heavy duty detergent powders for use in automatic washing machines. Silicone antifoams are regarded as very effective in this application as they can be added in very small quantities and are not affected by, e.g., the hardness of water, while traditional foam control compositions, such as soaps, require a certain water hardness for their effectiveness.

The detergent industry is moving towards the use of detergent compositions which perform adequately at lower laundering temperatures, due to environmental concern and energy conservation efforts. One way for achieving this goal is to increase the surfactant level in the detergent compositions. Anionic surfactants are especially favored. Unfortunately these surfactants usually create more foam than, for example, the nonionic surfactants. Since silicone foam control compositions do not directly contribute to the cleaning power of a detergent composition it is desirable to keep the addition level of such foam control compositions to a minimum. Therefore, improved foam control compositions are needed for incorporation in detergent compositions.

Foam control compositions useful in aqueous systems are described in U.S. Patent 3,455,839 which provides a method for reducing or preventing the foaming of aqueous systems which comprises incorporating therein a mixture consisting essentially of a dimethylpoly-siloxane liquid, a siloxane resin composed of (CH₃)₃SiO_{1/2} units and SiO₂ units and a silica aerogel. Other foam control compositions for use in pulping processes are described in U.S. Patent 3,666,681 where there is provided an antifoaming agent for aqueous systems comprising a mixture of (A) 100 parts by weight of a water insoluble organic liquid or solid which is a mineral oil, an ester of a carboxylic acid and a monohydric alcohol, an alcohol containing from 5 to 18 carbon atoms, a polyoxypropylene or polyoxybutylene glycol, a triorganophosphate, a vegetable oil or sperm oil; (B) from 0.5 to 10.0 parts by weight of an organopolysiloxane compound which is a hydroxyl terminated dimethylpolysiloxane fluid having a viscosity of at least 3.5 x 10⁻⁵ m²/s at 25°C. or a benzene soluble organopolysiloxane resin comprising (1) SiO₂ units and (2) R₃SiO_{1/2} units in which R is a monovalent hydrocarbon radical containing from 1 to 6 carbon atoms and in which the ratio of (2) units to (1) units is from 1.2:1 to 0.6:1; (c) from 0.5 to 10.0 parts by weight of a filler which is a finely divided silica or methylsilsesquioxane gel; and (D) from 0.002 to 5.0 parts by weight of a compound which is a hydrocarbon amine, ammonia, a disilazane of the formula 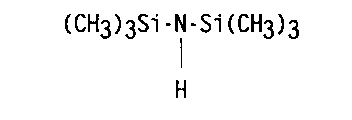 or a compound of the formula R'OH in which R' is an alkali metal or alkaline earth metal.

GB 1496011 discloses a combination of three organosilicon materials which when combined with mineral oil produce a defoaming composition. Said specification relates to a composition suitable for use in an oil-based defoamer consisting essentially of (1) from 55 to 96 percent by weight of a siloxane of the unit formula CH₃Si(OCH₃)ₓO_{3-x/2} in which X is of such value that there is from 10 to 35 percent by weight of methoxy groups based on the weight of (1), (2) from 2 to 25 percent by weight of a hydrocarbon solvent soluble copolymer of (CH₃)₃SiO_{1/2} units and SiO₂ units in which the mole ratio of (CH₃)₃SiO_{1/2} units is in the range from 0.5/1 to 1.2/1 and (3) from 2 to 25 percent by weight of a silicon-bonded hydroxyl terminated methylpolysiloxane fluid containing a major proportion of dimethylsiloxane units, the proportions being in the percent by weight based on the combined weights of (1), (2) and (3). However, such defoaming compositions do not perform adequately in laundering operations using high foaming detergent compositions.

U.S. Patent 4,554,331 teaches certain compositions can be produced from reactive liquid resins and a compound selected from acyloxysilanes, alkoxysilanes and oximosilanes. U.S. Patent 5,091,484 teaches the use of hydroxyl, trialkoxy or alkylene-trialkoxy end-blocked polydiorganosiloxane and a special MG resin.

U.S. Patents 4,639,489 and 4,749,740 teach a method for producing a silicone defoamer composition wherein a complex mixture of polyorganosiloxanes, filler, a resinous siloxane and a catalyst, to promote the reaction of the other components, are heated together at 50°C. to 300°C.

Hydrophobed silica/polydimethylsiloxane antifoams are also reviewed in DEFOAMING: Theory and Industrial Applications; Garrett, P.R., Ed.; Surfactant Science Series 45; Marcel Dekker: New York, 1993, especially pages 246-249.

Finally, EP 0217501 teaches a novel foam control composition is prepared by (1) forming a mixture of: (a) 100 parts by weight of a polydiorganosiloxane having triorganosiloxane end groups, (b) 10-125 parts by weight of a polydiorganosiloxane having one or more terminal silanol group(s) and at least 40 Si atoms; and (c) 0.5-10 parts by weight of an organopolysiloxane resin comprising units of formulae (I) and (II) in a ratio of 0.5-1.2:1 (R")₃ SiO_{0.5} (I) SiO₂ (II) (R" = 1-6C monovalent hydrocarbyl groups), the resin having an average of one or more Si bonded OH group(s); (2) heating the mixture to obtain a liquid siloxane composition having a viscosity at 25°C. of at least 7 x 10⁻³ m²/sec, pref. 1-3 x 10⁻² m²/sec; and (3) adding a finely divided filler having a surface that has been rendered hydrophobic or subsequently rendered hydrophobic by contact with a filler treating agent.

It is an object of the present invention to provide an improved silicone foam control composition for aqueous systems and, more particularly, for inclusion in high foaming detergent compositions, as well as pulp systems.

Our invention accordingly provides a foam control composition comprising (I) a liquid siloxane component and (II) a finely divided filler having its surface rendered hydrophobic, wherein the liquid siloxane component (I) has a viscosity at 25°C. of at least 5,000 mPa·s and is obtained by mixing (1) 100 parts by weight of a polydiorganosiloxane having at least one terminal silanol group and at least 40 Si atoms, (2) 0- 100 parts by weight of a polydiorganosiloxane having triorgano-siloxy end groups, and (3) from 0.5 to 10 parts by weight of an ultra high molecular weight organopolysiloxane resin comprising the copolymerized reaction product of: (A) a solid MQ resin with Mw less than 100,000, and (B) a substantially linear polydiorganosiloxane linker having hydrolyzable groups bonded to silicon atoms or silicon bonded hydrogen atoms, wherein components (A) and (B), are copolymerized in a weight ratio of (A):(B) preferably ranging from 5.6:1 to 44.5:1.

Liquid siloxane component (I) according to our invention has a viscosity at 25°C. of at least 5,000 mPa·s. A lower viscosity does not result in the desired improvement in the foam controlling ability of the compositions. Preferably the viscosity at 25°C. is in the range of from 15,000 mPa·s to 100,000 mPa·s. Although liquid siloxanes having higher viscosities are operative, they are more difficult to handle during processing, e.g., mixing.

Polydiorganosiloxanes (1) having at least one terminal silanol group for use in the liquid siloxane component (I) are well known and commercially available materials and may be represented by the general formula R'₃SiO-[Si(R)₂O]_{Z}-SiR'₃ where each R independently denotes a monovalent hydrocarbon group or a substituted monovalent hydrocarbon group, having from 1 to 20 carbon atoms, and R' is either a hydroxyl group or R, at least one R' being a hydroxyl group and z is at least 38. Preferred polydiorganosiloxanes (1) of this type have one hydroxyl group on each terminal Si atom, the value for z is less than 1500 and the R groups are alkyl groups containing 1 to 8 carbon atoms. In the more preferred polydiorgano-siloxanes (1), R is methyl and z has a value of from 400 to 1200. Polydiorganosiloxanes (1) are substantially linear polymers but a minor amount of RSiO_{3/2}, SiO₂ and/or R₃SiO_{1/2} units may be present. Polydiorganosiloxanes (1) are present in an amount of 100 parts by weight of liquid siloxane component (I).

Polydiorganosiloxanes (2) having triorgano-siloxy end groups for use in the liquid siloxane component (I) are also well known and commercially available and can be described by the general formula R-[Si(R₂)O]ₙ-SiR₃ where each R independently denotes a monovalent hydrocarbon group or a substituted monovalent hydrocarbon group, having from 1 to 20 carbon atoms and n is an integer. Examples of such monovalent hydrocarbon groups include alkyl groups for example methyl, ethyl, isobutyl, dodecyl, octadecyl and trifluoropropyl, alkenyl groups for example include vinyl, allyl and cyclohexenyl, aryl groups for example include phenyl, tolyl and chlorophenyl. Polydiorganosiloxanes (2) are substantially linear siloxanes but a minor amount of RSiO_{3/2} units may be present where R is as defined above.

Preferably R is alkyl and most preferably polydiorganosiloxanes (2) having triorganosiloxy end groups are trimethylsiloxy endblocked polydimethylsiloxanes. They may be prepared by the simple conversion of dimethyldihalosilanes and trimethylhalosilanes to siloxanes by normal hydrolysis and condensation methods. Preferably the value of n is chosen so that the viscosity at 25°C. of these siloxane polymers is in the range of from 100 mPa·s to 10,000 mPa·s. The most preferred triorganosiloxy endblocked polydiorganosiloxanes (2) have a viscosity in the range of from 500 mPa·s to 2000 mPa·s. The triorganosiloxy endblocked polydiorganosiloxanes (2) are present in an amount of 0-100 parts by weight, preferably 50 to 75 parts by weight by weight of liquid siloxane component (I).

Organopolysiloxane resin (3) is an ultra-high molecular weight MQ resin. "Ultra-high molecular weight MQ resin" means a resin that is prepared by chemically linking (copolymerizing) MQ resin molecules having Mw less than 100,000 with polysiloxane linkers such that the reaction product has a Mw of at least 100,000. The ultra-high molecular weight MQ resin is soluble in at least one organic solvent. The ultra-high molecular weight MQ resin is present in an amount of 0.5 to 10 parts by weight, preferably 1 to 6 parts by weight.

The ultra-high molecular weight MQ resin of this invention comprises the copolymerized reaction product of:
(A) a solid MQ resin having Mw less than 100,000, and
(B) a substantially linear polydiorganosiloxane linker.

Preferably, component (A) is a solid MQ resin containing substantial amount of silanol and having M and Q siloxy units having the average general formula R¹ₐR²_{b}R³_{c}SiO(_{4-a-b-c)/2,} R¹ is a hydroxyl group and a is a number from 0.1 to 0.2. R² is a monovalent hydrocarbon group having at least one unsaturated carbon-carbon bond (i.e., vinyl) that is capable of addition reaction with a silicon-bonded hydrogen atom; and b is number from 0 to 1.4. Each R³ is independently selected from alkyl, aryl or arylalkyl groups; and c is a number greater than or equal to 0. However, 1 ≤ a +b +c ≤ 1.5; if a +b +c is less than 1, component (A) will be insoluble in organic solvents; and the copolymerized reaction product thereof will also be insoluble in organic solvents. If a +b +c is greater than 1.5, then the MQ resin component (A) will be a viscous liquid, not a brittle solid.

MQ resins suitable for use as component (A), and methods for their preparation, are known in the art. For example, U.S. Patent 2,814,601 discloses MQ resins prepared by converting a water-soluble silicate into a silicic acid monomer or silicic acid oligomer using an acid. When adequate polymerization has been achieved, the resin is endcapped with trimethylchlorosilane to yield the MQ resin. Another method for preparing MQ resins is disclosed in U.S. Patent 2,857,356 by the cohydrolysis of a mixture of an alkyl silicate and a hydrolyzable trialkylsilane organopolysiloxane with water.

A preferred method for preparing a solid MQ resin for component (A) is as follows. A flowing stream of aqueous sodium silicate is rapidly mixed in a continuous manner with aqueous hydrochloric acid flowing at a rate sufficient to reduce the pH of the resulting solution to below pH 2, preferentially near pH 0. Rapid mixing is critical during this step to minimize the amount of time material experiences local concentration regimes with pH 5-8, a range in which silicate solutions have minimum stability towards gelation. The acidified silicate solution is allowed to pass through a pipe with a diameter and length sufficient to allow the desired molecular size distribution to develop. This flowing aqueous solution is then dropped into a stirred heated reaction mixture into which isopropanol, trimethylchloro-silane and hexamethyldisiloxane are also being added to enable capping of silanol moieties on the polymerizing silicate species with trimethylsilyl groups. The two-phase mixture leaving this vessel in a continuous manner is separated and fresh water is mixed with and separated from the organic phase to reduce the amount of residual hydrophilic impurities in the organic phase. A hydrocarbon solvent is mixed with the organic phase and the hexamethyldisiloxane carrier solvent is removed in a distillation column. The resulting hydrocarbon solvent solution of siloxane resin is the desired resin intermediate. One skilled in the art knows how to obtain a solid MQ resin suitable for use as component (A) using the above or similar method.

Preferably, component (B) is a substantially linear polydiorganosiloxane linker having the empirical formula:

(R⁴ ₍₃₋ₚ₎R⁵ ₚSiO_{1/2}) (R⁴ ₂SiO_{2/2})ₓ ((R⁴R⁵SiO_{2/2}) (R⁴ ₂SiO_{2/2})ₓ)_{y}(R⁴ ₍₃₋ₚ₎R⁵ ₚSiO_{1/2}).

Each R⁴ is a monovalent group independently selected from alkyl, aryl or arylalkyl groups; and p is 0, 1, 2 or 3. Each R⁵ is a monovalent group independently selected from hydrogen, hydroxyl, alkoxy, oximo, alkyloximo or aryloximo groups; and x ranges from 0 to 100; and y ranges from 0 to 100. However, at least two R⁵ groups must be present in each molecule and the two R⁵ groups must be bonded to different silicon atoms. If there are not at least two R⁵ groups bonded to different silicon atoms, the ultra-high molecular weight MQ resin produced will have a Mw less than 100,000. The average degree of polymerization between siloxane units containing the two R⁵ groups must be less than 100, preferably in the range of 15 to 50. If the degree of polymerization between the two R⁵ groups is higher than 100, the (A):(B) ratio would be <5.6:1 in order to produce the ultra-large molecular weight MQ resin. Each molecule of the substantially linear polydiorganosiloxane must have at least five siloxy units. Component (B) has a viscosity of 2 to 200 mPa·s, preferably 30 to 100 mPa·s.

The ultra-high molecular weight MQ resin can be made by heating a reaction mixture comprising components (A) and (B) described above; and component (C), a catalyst, to copolymerize components (A) and (B); thereby forming the copolymerized reaction product of (A) and (B). Components (A), (B) and (C) are dissolved in component (D), a solvent, to facilitate the reaction. Component (E), a catalyst inhibitor, may also be added to the reaction mixture when addition reaction is used to copolymerize components (A) and (B). Components (A) and (B) and the amounts of each are selected such that the copolymerized reaction product has a molecular weight of 100,000 or greater and is soluble in at least one organic solvent.

Components (A) and (B) are copolymerized in a weight ratio of (A):(B) in the range of preferably 5.6:1 to 44.5:1, more preferably 7.0:1 to 20.0:1, and most preferably 7.8:1 to 17.0:1. However, the exact ratio selected depends on the following variables: the structure and functionality of component (A), the degree of polymerization of component (B) (DP_{(B)}), the functionality of component (B), and whether addition reaction or condensation reaction will be used to copolymerize (A) and (B).

The applicants believe that the following guidelines will allow one skilled in the art to select an appropriate (A):(B) ratio without undue experimentation. Holding all variables constant except the DP_{(B)}, for a given MQ resin for component (A), as DP_{(B)} increases, the Mw of the copolymerized reaction product decreases.

Holding all variable constant except the amount of component (B), for a given MQ resin for component (A) and a given linker used as component (B), as the amount of component (B) increases, Mw of the copolymerized reaction product increases. However, if too much component (B) is present (e.g., the ratio is <5.6:1), then the copolymerized reaction product could be elastomeric or could gel during heating or the copolymerized reaction product may not be soluble in solvents. If too little component (B) is present (e.g., the ratio is >44.5:1), then the copolymerized reaction product can have Mw less than 100,000.

When (A) and (B) will be copolymerized by condensation reaction, the (A):(B) ratio is preferably in the range of 5.6:1 to 25.3:1, more preferably in the range of 7:1 to 20:1. When (A) and (B) will be copolymerized by addition reaction, the (A):(B) ratio is preferably in the range of 27.5:1 to 44.5:1. The Mw of the copolymerized reaction product can be controlled by varying the MQ resin (A) and linker (B), by varying the (A):(B) ratio, by varying the DP_{(B)} or combinations thereof.

Components (A) and (B) can be copolymerized by condensation reaction, addition reaction or combinations thereof. When components (A) and (B) will be copolymerized by condensation reaction, component (A) has the formula given above. Also, a must be in the range of 0.1 to 0.2. If a is too low (i.e., the hydroxyl content is too low), the resulting copolymerized reaction product, ultra-high molecular weight MQ resins, will contain too few OH groups and thus can not be used in this application since the Mw is less than 100,000. If a is too high (i.e., the hydroxyl content is too high), component (A) will be insoluble.

When components (A) and (B) will be copolymerized by addition reaction, component (A) has the formula above, however, b must be in the range of 0.02 to 1.4. If b is too low (i.e., the vinyl content is too low), then the resulting copolymerized reaction product will have Mw less than 100,000.

A catalyst, component (C), is required to promote the reaction. Component (C) is selected from (C1) a condensation reaction catalyst, (C2) an addition reaction catalyst or combinations thereof.

When components (A) and (B) are copolymerized by condensation reaction, component (C1), a condensation reaction catalyst, is added to the reaction mixture. Suitable condensation reaction catalysts are base catalysts including metal hydroxides such as potassium hydroxide and sodium hydroxide; metal salts such as silanolates, carboxylates and carbonates; ammonia; amines; and titanates such as tetrabutyl titanates; and combinations thereof. Ammonia is preferred. Suitable condensation reactions are known in the art and are disclosed in U.S. Patent 4,639,489. The composition is typically heated to a temperature of 60 to 150°C., preferably 120 to 140°C., for 1 to 24 hours to carry out the condensation reaction.

When components (A) and (B) are copolymerized by addition reaction, component (C2), an addition reaction catalyst, is added to the reaction mixture. Component (C2) is preferably a platinum catalyst. Suitable platinum catalysts include chloroplatinic acid, alcohol solutions of chloroplatinic acid and complexes of platinum compounds with unsaturated organic compounds such as olefins and organosiloxanes containing unsaturated hydrocarbon groups. Component (C2) is preferably a complex of platinum with an organosiloxane such as a complex of platinum with 1,3-diethenyl-1,1,3,3-tetramethyldisiloxane. The composition is typically heated to a temperature of temperature of 20 to 150°C., preferably 100 to 140°C., for 0.5 to 2 hours to carry out the addition reaction.

The reaction mixture comprises components (A), (B), (C) and component (D), a solvent, preferably an organic solvent. Examples of suitable organic solvents include alkanes such as hexane and heptane; aromatic solvents such as toluene, xylene and benzene; ketones; and tetrahydrofuran. Toluene and xylene are preferred. The amount of solvent in the reaction mixture is 20 to 80 wt% of the composition.

When copolymerization is performed by addition reaction, component (E), an optional catalyst inhibitor can be added to the reaction mixture. Component (E) can be any addition reaction catalyst inhibitor. Suitable inhibitors are disclosed in U.S. Patent 3,445,420. Component (E) can be an amine such as trialkylamine, an oxime, a peroxide such as hydrogen peroxide or an acetylenic compound such as dialkylacetylene, dicarboxylates and acetylenic alcohols such as methylbutynol or ethynyl cyclohexanol. Component (E) is preferably ethynyl cyclohexanol. Component (E) comprises 0 to 0.05 weight percent of the composition.

After copolymerization, the solvent can be removed from the resulting ultra-high molecular weight MQ resin by any convenient means. For example, the solvent can be allowed to evaporate at ambient conditions or the ultra-high molecular weight MQ resin can be subjected to mild heat. The method of removing the solvent is not critical and one skilled in the art knows how to remove the solvent.

The ultra high molecular weight resins used in this invention are more fully described in Euroepan patent application filed by the same applicant on the same day under the title ULTRA-HIGH MOLECULAR WEIGHT, SOLUBLE SILOXANE RESINS, claiming priority of U.S. Serial No. 09/224,399.

The finely divided fillers (II) used in the foam control compositions of the present invention may be any of those inorganic fillers suitable for formulating foam control compositions. Such fillers are described in many patent applications. They include fumed TiO₂, Al₂O₂, aluminosilicates and SiO₂ with a surface area as measured by BET measurement of at least 50 m2/g. Preferred fillers are silica fillers which can be made according to any of the standard manufacturing techniques, for example, thermal decomposition of a silicon halide, a decomposition and a precipitation of a metal salt of silicic acid, e.g., sodium silicate and a gel formation method. Suitable silicas for use in a foam control composition according to this invention include therefore fumed silica, precipitated silica and gel formation silica. The average particle size of these fillers may range from 0.1 to 20 µm but preferably is from 0.5 to 2.5 µm.

The surface of filler particles (II) is rendered hydrophobic in order to make the foam control composition sufficiently effective in aqueous systems. Rendering the filler particles hydrophobic may be done either prior to or after dispersing the filler particles in the liquid siloxane component (I). This can be effected by pretreatment of the filler particles with reactive silanes or siloxanes, for example, dimethyldichlorosilane, trimethylchlorosilane, hexamethyldisilazane, hydroxy-endblocked and methyl-endblocked polydimethylsiloxanes and siloxane resins. Fillers which have already been treated with such compounds are commercially available from many companies, for example, Sipernat D10 from Degussa. The surface of the filler may alternatively be rendered hydrophobic in situ, i.e., after the filler has been dispersed in the liquid siloxane component (I). This may be effected by adding to the liquid siloxane component (I) prior to, during or after the dispersion of the filler the appropriate amount of a hydrophobing agent, of the kind described above and heating the mixture to a temperature above 40°C. The quantity of hydrophobing agent to be employed will depend on the nature of the agent and the filler and will be evident or ascertainable by those skilled in the art. Sufficient hydrophobing agent should be employed to endow the filler with at least a discernible degree of hydrophobicity.

In another aspect of the invention, there is provided a method of making a foam control composition wherein that the method comprises (i) forming a mixture comprising (1) 100 parts by weight of a polydiorgano-siloxane having at least one terminal silanol group and at least 40 Si atoms, (2) 0 -100 parts by weight of a polydiorganosiloxane having triorganosiloxy end groups, and (3) from 0.5 to 10 parts by weight of an ultra high molecular weight organopolysiloxane resin comprising the copolymerized reaction product of: (A) a solid MQ resin with Mw less than 100,000, and (B) a substantially linear polydiorganosiloxane linker having hydrolyzable groups bonded to silicon atoms or silicon bonded hydrogen atoms, wherein components (A) and (B), are copolymerized in a weight ratio of (A):(B) typically ranging from 5.6:1 to 44.5:1 and subsequently (ii) heating the mixture obtained by step (i) at reduced pressure, and (iii) adding thereto a finely divided filler having a surface which has been rendered hydrophobic or which is subsequently rendered hydrophobic by contact with a filler treating agent.

The first and second steps of the process of the invention may be carried out in any type of vessel which has mixing and heating facilities. The amount of polydiorganosiloxane (2) employed in the method of the invention is in the range of from 0 - 100 parts by weight per 100 parts by weight of polydiorganosiloxane (1). The amount of an ultra high molecular weight organopoly-siloxane resin (3) used in the method of the invention will depend on the viscosity of the polydiorganosiloxanes (1) and (2) but is at least 0.5 parts up to a maximum of 10 parts by weight per 100 parts of polydiorganosiloxane (1). Lower amounts of ultra high molecular weight organopolysiloxane resin (3) lead to compositions of inferior foam controlling ability compared to foam control compositions according to the invention. Using higher levels than 10 parts tends to result in a gel structure and not a liquid siloxane. As a general indication, higher levels of the ultra high molecular weight organopolysiloxane resin (3) are required with lower viscosity polydiorganosiloxanes (1) and (2).

In addition to the essential ingredients, there may be added an organic solvent for the ultra high molecular weight organopolysiloxane resin. The resin may be present in such solvent before being mixed with the other ingredients of the liquid siloxane component. A suitable solvent is xylene. The amount of solvent added is not critical but is preferably kept to a minimum for environmental and economical reasons. Most preferably, only sufficient solvent is added to maintain the ultra high molecular weight organopolysiloxane resin in solution prior to its addition to the mixture. There may also be added to the mixture a catalyst which may be a condensation catalyst or equilibration catalyst. Suitable catalysts include alkali metal hydroxides, alkali metal alkoxides, alkali metal silanolates, metal salts of organic acids, for example, tin, lead or zinc salts of such acids as dodecanoic acid, octanoic acid or acetic acid. Preferably these catalysts are added after the mixture has been heated to an elevated temperature, for example, 150 to 190°C., in vacuum, 40 mm Hg for example. The heating stage (ii) is preferably carried out at reduced pressure, for example, at 40 mm Hg. The temperature used in step (ii) is dependent on the catalyst used but is preferably at 80 - 100 °C. When the heating is completed, the mixture is cooled down and any residual alkali catalyst is then preferably neutralized. This can be done by mixing in stoichiometric or approximately stoichiometric amounts of any acid compound, for example, acetic acid.

Filler particles where the surface has been rendered hydrophobic may be mixed directly (step iii) into the liquid siloxane mixture which was prepared in steps (i) and (ii). Such hydrophobic particles may even be mixed in prior to or during the carrying out of step (ii). This mixing may be done by any conventional method but is preferably done by a homogenizing method, using techniques which are well known in the art, for example, mechanical or ultrasonic homogenization. The admixing may be carried out at any convenient temperature in order to obtain a foam control composition according to our invention.

An untreated filler may be added, instead of or in addition to, a filler material which has been pretreated to render its surface hydrophobic. When an untreated filler is added, a filler treating agent should also be included in the composition to render the surface of the untreated filler hydrophobic. Particularly suitable filler treating agents are organosilicon compounds of the type described hereinabove.

When an untreated filler is used it is particularly important that step (iii) be conducted after the steps (i) and (ii) are completed. Simultaneously performing steps (ii) and (iii) cause reaction between the filler particles and reactive ingredients of the liquid siloxane component in the mixture. Such reaction could affect the reproducibility and foam controlling ability of the foam control compositions and should thus be avoided. The mixture comprising the liquid siloxane component, the untreated filler and the filler treating agent should be heated subsequent to, or during, the mixing or homogenizing stage to a temperature above 40°C.

The amount of filler used to obtain a foam control composition according to the invention is not critical and may be in the range of from 2 to 20% by weight of the total foam control composition. Preferably from 3 to 15% of filler is used.

Optionally a liquid triorganosiloxy endblocked polydiorganosiloxane may also be added during step (iii) of a method according to the invention. This liquid polydiorganosiloxane may be added separately or as a mixture with a treated filler or with an untreated filler and a hydrophobing agent.

The foam control compositions of this invention optionally comprise at least on surfactant.

The foam control compositions of this invention are useful for reducing or preventing foam formation in aqueous systems such as detergent or pulp systems. Such foam control compositions are particularly useful for reducing the foam generated by detergent compositions, especially during laundering operations. The foam control composition may be incorporated in a detergent composition in any of the known ways, for example, in emulsion form or in a form wherein it is protected against degradation during for example storage, such as in encapsulated form. Such methods are well known in the art and have been disclosed in a number of patent specifications. The advantage of foam control compositions according to this invention is greatest when the composition is used in a high foaming detergent composition. However, they can also be incorporated in other detergent compositions.

The foam control compositions of the invention are therefore particularly useful when incorporated into detergent compositions having a high level of high foaming surfactants, for example, anionic surfactants, e.g., sodium dodecyl benzene sulphonate. High levels of anionic surfactants may be used to ensure effectiveness of detergent composition at lower washing temperatures, e.g., 40°C. They may also be used as a pulp aid in pulp systems.

In another aspect of the invention, there is provided a detergent composition comprising a (1) detergent component and (2) the foam control composition according to the invention. In a preferred embodiment the detergent composition comprises (1) 100 parts by weight of the detergent component and (2) from 0.5 to 5 parts by weight of the foam control composition according to the invention.

The following examples illustrate the invention. All parts and percentages are expressed by weight unless otherwise stated.

### Preparation of Ultra High Molecular Weight Resins

The ultra-high molecular weight MQ resins of this invention were prepared by reacting component (A), component (B) and xylene in a three neck round bottomed flask equipped with a Dean-Stark trap and water cooled condenser. Component (A) was a solid MQ resin having the empirical formula R¹ₐR²_{b}R³_{c}SiO_{(4-a-b-c)/2} wherein R¹ is a hydroxyl group, R³ is a methyl group, a is 0.12, b is 0 and c is 1.28. Mw of component (A) was 12,900.

Component (B) was a predominantly linear silanol-endblocked polydimethylsiloxane having the formula HO(Me₂SiO)₁₅H.

Reaction solutions were heated under conditions of reflux (140°C.) and with constant stirring for 24 hours, during which ammonia gas catalyst was continuously bubbled through the reaction solutions and any water produced by the reaction was removed by the Dean Stark trap. At the end of the reaction time, the flask was purged with nitrogen gas and the solution containing the reaction product cooled to ambient temperature.

Three resins with different weight-average molecular weights were made using different ratios of (A):(B) (see Table I). All parts are weight parts and all molecular weights are reported as weight average molecular weight, Mw, as determined by gel permeation chromatography (GPC) using two Plgel 5 micron Mixed-D 300X 7.5 mm columns calibrated with an MQ resin standard which were characterized using osmometry and light scattering.

### Preparation of Branched Fluids and Antifoam Compounds

Four branched fluids were prepared using one of the ultra-high molecular weight MQ resins (3) prepared above, a silanol-terminated polydimethylsiloxane (1) with a viscosity of 13,000 mPa·s and a trimethylsiloxy-terminated polydimethylsiloxane (2) with a viscosity of 1000 mPa·s according to the procedures described in U.S. Patent 4,639,489.

In each reaction, 771.6 g of trimethylsiloxy-terminated polydimethylsiloxane (2) was added to a 2-liter, three neck flask containing 52.2 g of a 56% solution of the ultra-high molecular weight MQ resins (3) in xylene with stirring. The resulting blend was heated at 180°C. and 5320 Pa with stirring for one hour to remove xylene. The blend was cooled to 90°C. before adding 384 g of silanol-terminated polydimethylsiloxane (1) and 1.8 g KOH solution in isopropylacohol (1.7 moles KOH per liter solution). The blend was heated at 90°C. and 5330 Pa until desired viscosity was reached. At the end of reaction, the KOH catalyst was neutralized with 0.18 g of acetic acid in 1.92 g of water and the mixture was stirred for 0.5 hour while it was cooled down to room temperature. Viscosity was measured at room temperature (25 +/- 2°C) at 2.5 RPM using a Brookfield® cone/plate digital viscometer with a # 52 spindle. Table II shows the resins used to prepare the branched fluids and their viscosities.

**Table 1:**

| Prep of ultra-high molecular weight MQ resins and their molecular weights. | | | | | |
|---|---|---|---|---|---|
| MQ Resin | Wt Parts of (A) | Wt Parts of (B) | Wt Parts of (D) | (A):(B) | Mw |
| MQR-1 | 95.2 | 4.8 | 36.5 | 19.9:1 | 266,000 |
| MQR-2 | 94.0 | 6.0 | 36.0 | 15.7:1 | 665,000 |
| MQR-3 | 92.7 | 7.3 | 35.5 | 12.7:1 | 2,230,000 |

**Table II.**

| Preparation of branched fluids and their viscosity. | | | |
|---|---|---|---|
| Sample | Resin used | Reaction time, hours | Viscosity, mPa·s |
| BF-1 | MQR-3 | 3.3 | 21,100 |
| BF-2 | MQR-2 | 5.0 | 27,200 |
| BF-3 | MQR-1 | 3.8 | 31,800 |
| BF-4 | MQR-1 | 2.8 | 21,000 |

The antifoam compounds were made from the branched fluids by mixing 3% of TS-530 silicas (Cabot Corp), which is a hexamethyldisilazane treated fumed silica. The compounds were evaluated in several shake tests to test compound performance, stability and robustness in an emulsion delivery.

Control 1 was prepared for comparison purposes and is a commercial antifoam product available from the Dow Corning Corp. as DC 2-3604. It was prepared according to the procedures described in U.S. Patent 4,639,489.

Control 2 was prepared for comparison purposes, using the procedures described above, except that a MQ resin such as described in EP 0217501 was substituted for the ultra high molecular weight resins of the present invention.

### Shake test procedure

The shake test procedure is as follows:
1. The antifoam compounds (0.10 grams) were weighted into a 118 ml (4 oz.) plastic beaker.
2. P15-200 glycol, 44.90 grams (available from Dow Chemical Co., Midland, Mi.) were added to the antifoam compound in the beaker, along with 5.00 grams 2-3155 OCS surfactant (available from Dow Corning Corp., Midland, Mi.)
3. The mixture was stirred on a Lightnin Lab Mixer for 15 minutes at 500-800 rpm. Due to the separation and instability of the emulsion (which can vary greatly for different compounds), the test was performed immediately upon emulsion preparation.
4. Each of the 100 g detergent solutions were weighed into a 236 ml (8 oz.) square bottle. The two detergent solutions, MKS-3 and MKS-4 were prepared according to the formulations below by mixing the components. They were prepared at 2 g/L concentrations and allowed to stir for at least 30 minutes prior to testing. All of the proportions are based on weight percents.

MKS-3 Matrix: 29.8 deionized water; 8.3 sodium citrate; 7.0 propylene glycol; 2.0 ethanolamine; 1.0 Emery 621 Coconut Fatty Acid (Henkel); 33.7 Witcolate LES-60C (Witco), an alkyl ether sulfate (sodium laureth sulfate); 15.7 Glucopon 600 UP (Henkel) alkylpoly-glycoside; and 2.6 Neodol 23-6.5 Alcohol Ethoxylate (Shell) Alcohol Ethoxylate (C12-C13, 6.5 EO).

MKS-4 Matrix: 22.0 deionized water; 8.3 sodium citrate; 7.0 propylene glycol; 1.0 Emery 621 Coconut Fatty Acid (Henkel); 43.5 Witconate 45 Liquid (Witco) a linear alkylbenzene sulfonate (Na dodecylbenzene sulfonate); 15.7 Glucopon 600 UP (Henkel), alkylpolyglycoside (C12, 14, 16); 2.6 Neodol 23-6.5 Alcohol Ethoxylate (Shell), an alcohol ethoxylate (C12-C13, 6.5 EO).

The use of deionized water affords testing in a more "pro-foaming" environment versus washing machine testing.

5. The antifoam emulsions, 0.25 g, as prepared in steps 1 and 2 were mixed with the detergent solution of step 4 and the bottle placed on the shaker (Burrell Wrist Action Shaker, Model 75, clutch setting = 7.5, arm length = 15 cm) for immediate testing.

6. A line was marked on the bottle at the liquid level. This line was the reference point (Omm foam height) in recording foam height.

7. The solution was shaken for 40 seconds and the initial foam height immediately measured. This measurement represents the compound's utility as an antifoam. The results were also read after a 1 minute wait, which showed the tendency of the compound to defoam the solution. The "defoam" column in Tables III and IV below shows the difference between intial foam heights and the foam height after 1 minute.

8. The solution was shaken again for 2 minutes. The results were read immediately and also after a 1 minute wait.

Tables III and IV below show the performance of the antifoam compounds of the invention based on the shake test in the described detergent formulations. Table III shows data from the MKS-3 detergent systems and Table IV shows data from MKS-4 systems. Shake test results indicated that the ultra high molecular weight resins of the invention, as compared to Control 1 had better antifoam properties and excellent defoam properties. Initial foam heights or antifoam properties were comparable between samples but the major difference was defoam performance, upon letting the samples sit for 1min after the 2 minute shake. All of the experimental samples defoamed to a greater extent than Control 1.

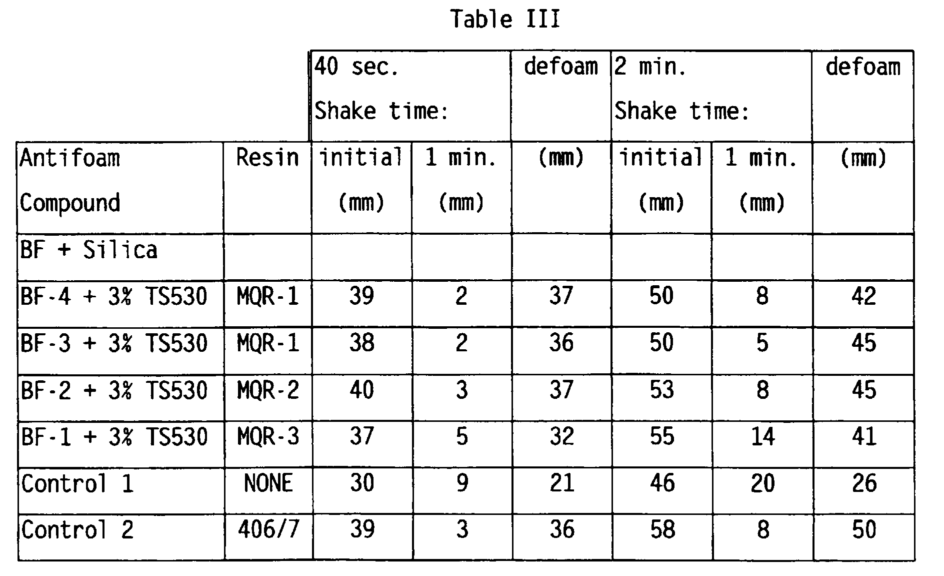

The best defoam performance in MKS-3 were the compounds formulated with BF-3 and BF-2 with defoam values of 45 mm reduction of foam after 1 minute. These samples were based upon the resins MQR-1 or MQR-2 whose molecular weights were either 266,000 Mw or 665,000 Mw. All of these performed well. Branched fluid BF-1 made with MQR-3, the 2,230,000 Mw resin, did not perform as well but were still much better than Control 1.

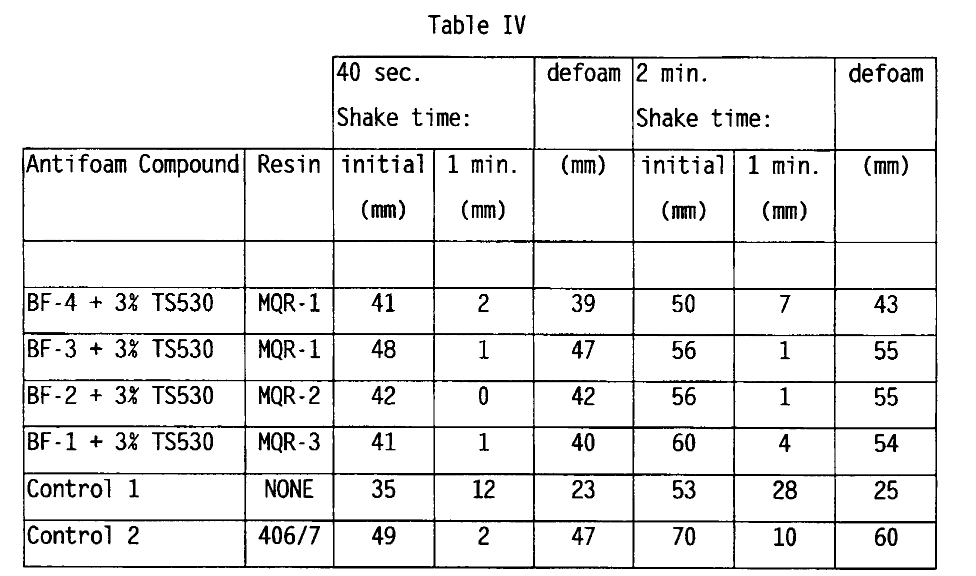

In MKS-4 detergent matrix, very similar results were obtained with the two best results with BF-3 made with MQR-1 and BF-2 made with MQR-2 which had at 2 minute shake, defoam of 55 mm leaving just 1 mm of foam after 1min rest. Again the higher molecular weight based resin MQR-3 made into branched fluid BF-1 did not perform as well as the antifoam compounds made with the lower molecular weight (233,000 mPa·s and 665,000 mPa·s) resins. All of the compounds based upon the ultra high molecular weight resins outperformed the Control 1 compound. With respect to the Control 2 compound, the ultra high molecular weight resins of the invention had superior initial antifoam properties as compared to Control 2, especially in the 2 minute shake test.

## Claims

1. A foam control composition comprising: (I) a liquid siloxane component and (II) a finely divided filler having a hydrophobic surface, wherein the liquid siloxane component (I) has a viscosity at 25°C. of at least 5,000 mPa-s and is obtainable by mixing (1) 100 parts by weight of a polydiorganosiloxane having at least one terminal silanol group and at least 40 Si atoms, (2) 0 - 100 parts by weight of a polydiorganosiloxane having triorganosiloxy end groups, and (3) from 0.5 to 10 parts by weight of an ultra high molecular weight organopolysiloxane resin comprising the copolymerized reaction product of: (A) a solid MQ resin having Mw less than 100,000 and (B) a substantially linear polydiorganosiloxane linker.

2. The foam control composition according to claim 1 wherein the polydiorganosiloxane (1) has one hydroxyl group on each terminal silicon atom, substantially all other substituents are alkyl groups containing from 1 to 8 carbon atoms and has from 400 to 1200 silicon atoms in the siloxane chain.

3. The foam control composition according to claims 1 or 2 wherein from 3 to 15 percent by weight of filler is used based on the total weight of the foam control composition.

4. The foam control composition according to any of claims 1 to 3 wherein said solid MQ resin (A) having a weight average molecular weight less than 100,000 has M and Q units of empirical formula R¹ₐR²_{b}R³_{c}SiO_{(4-a-b-c)/2} wherein R¹ is a hydroxyl group, R² is a monovalent hydrocarbon group having at least one unsaturated carbon-carbon bond that is capable of addition reaction with a silicon-bonded hydrogen atom; each R³ is independently selected from alkyl, aryl or arylalkyl groups, a is a number from 0.1 to 0.2, b is number from 0 to 1.4 and c is a number greater than or equal to 0, with the provisos that: 1 ≤ a +b +c ≤ 1.5; and said substantially linear polydiorganosiloxane (B) has the empirical formula
(R⁴ ₍₃₋ₚ₎R⁵ ₚSiO_{1/2}) (R⁴ ₂SiO_{2/2})ₓ ((R⁴R⁵SiO_{2/2}) (R⁴ ₂SiO_{2/2})ₓ)_{y} (R⁴ ₍₃₋ₚ₎R⁵ ₚSiO_{1/2})
wherein each R⁴ is a monovalent group independently selected from alkyl, aryl and arylalkyl groups, each R⁵ is a monovalent group independently selected from hydrogen, hydroxyl, alkoxy, oximo, alkyloximo or aryloximo groups, p is 0, 1, 2 or 3, x is 0 to 100, y is 0 to 100 with the provisos that at least two R⁵ groups are present in each molecule, at least two of the R⁵ groups are bonded to different silicon atoms within the molecule and each molecule of the substantially linear polydiorganosiloxane has a degree of polymerization of at least 5; and wherein amounts of component (A) and (B) are selected such that the copolymerized reaction product has a weight average molecular weight of at least 100,000, and the copolymerized reaction product of (A) and (B) is soluble in at least one organic solvent.

5. The foam control composition according to claim 4 wherein the weight ratio of (A):(B) ranges from 5.6:1 to 44.5:1.

6. The foam control composition according to claims 4 or 5 wherein the weight average molecular weight of the copolymerized reaction product is 100,000 to 2,000,000.

7. A method of making a foam control composition characterized in that the method comprises (i) forming a mixture comprising (1) 100 parts by weight of a polydiorganosiloxane having at least one terminal silanol group and at least 40 Si atoms (2) 0 - 100 parts by weight of a polydiorganosiloxane having triorgano-siloxy end groups and (3) from 0.5 to 10 parts by weight of an organopolysiloxane resin comprising an ultra-high molecular weight MQ resin comprising the copolymerized reaction product of: (A) a solid MQ resin having Mw less than 100,000, and (B) a substantially linear polydiorganosiloxane linker; (ii) heating the mixture obtained by step (i) to a temperature of at least 20°C; and (iii) adding thereto a finely divided filler having a surface which has been rendered hydrophobic by contact with a filler treating agent or which is subsequently rendered hydrophobic by contact with a filler treating agent.

8. The method according to claim 7 further comprising the additional step of adding a catalyst during step (ii).

9. The method according to claims 7 or 8 wherein said solid MQ resin having weight average molecular weight less than 100,000 (A) has M and Q units of the empirical formula R¹ₐR²_{b}R³_{c}SiO_{(4-a-b-c)/2} wherein R¹ is a hydroxyl group, R² is a monovalent hydrocarbon group having at least one unsaturated carbon-carbon bond that is capable of addition reaction with a silicon-bonded hydrogen atom; each R³ is independently selected from the group consisting of alkyl, aryl and arylalkyl groups, a is a number from 0.1 to 0.2, b is a number from 0 to 1.4 and c is a number greater than or equal to 0, with the provisos that 1 ≤ a +b +c ≤ 1.5; and said substantially linear polydiorganosiloxane (B) has the empirical formula
(R⁴ ₍₃₋ₚ₎R⁵ ₚSiO_{1/2}) (R⁴ ₂SiO_{2/2})ₓ ((R⁴R⁵SiO_{2/2}) (R⁴ ₂SiO_{2/2})ₓ)_{y} (R⁴ ₍₃₋ₚ₎R⁵ ₚSiO_{1/2})
wherein each R⁴ is a monovalent group independently selected from alkyl, aryl and arylalkyl groups, each R⁵ is a monovalent group independently selected from hydrogen, hydroxyl, alkoxy, oximo, alkyloximo and aryloximo groups, p is 0, 1, 2 or 3, x is 0 to 100, y is 0 to 100 with the provisos that at least two R⁵ are present in each molecule, at least two R⁵ groups are bonded to different silicon atoms within the molecule and each molecule of the substantially linear polydiorganosiloxane has a degree of polymerization of at least 5; and wherein the amounts of components (A) and (B) are selected such that the copolymerized reaction product has a weight average molecular weight of at least 100,000, and the copolymerized reaction product of (A) and (B) is soluble in at least one organic solvent.

10. The method according to claim 9 wherein the weight ratio of (A):(B) ranges from 5.6:1 to 44.5:1.

11. The method according to claims 9 and 10 wherein components (A) and (B) are copolymerized with a catalyst and said catalyst is selected from (C1) condensation reaction catalysts, (C2) addition reaction catalysts or combinations thereof.

12. A detergent composition comprising the foam control composition according to any of claims 1 to 6 and at least one detergent component.

13. The detergent composition according to claim 12 comprising 0.5 to 5 parts by weight of the foam control composition and 100 parts by weight of at least one detergent component.
